# FASCICULE DE BREVET EUROPEEN

(11) **EP 3 319 168 B1**
(45) Date de publication et mention de la délivrance du brevet: **22.09.2021**
(21) Numéro de dépôt: 17199824.8
(22) Date de dépôt: 03.11.2017
(51) Int. Cl.: H01Q 1/22, G06K 19/077, H01Q 23/00

(54) **DISPOSITIF D'EMISSION RECEPTION RADIOFREQUENCE**
FUNKFREQUENZ-SENDE-/EMPFANGSGERÄT
RADIOFREQUENCY TRANSCEIVER DEVICE

(30) Priorité: 07.11.2016 FR 1660736
(43) Date de publication de la demande: 09.05.2018
(73) Titulaire: Commissariat à l'Energie Atomique et aux Energies Alternatives, 75015 Paris (FR)
(72) Inventeur: MARNAT, Loïc, 38100 GRENOBLE (FR); DUSSOPT, Laurent, 38100 GRENOBLE (FR); PINTOS, Jean-François, 38140 SAINT-BLAISE-DU-BUIS (FR); VICARD, Dominique, 38190 BERNIN (FR); ANDIA VERA, Gianfranco, 38000 GRENOBLE (FR)
(74) Mandataire: IP Trust

(56) Documents cités:
- US-A1- 2015 230 336
- US-B2- 8 471 773
- US-B2- 8 723 312

## Description

### DOMAINE DE L'INVENTION

La présente invention concerne un dispositif d'émission réception radiofréquence.

### ARRIERE PLAN TECHNOLOGIQUE DE L'INVENTION

On connaît du document US8471773 un exemple d'un tel dispositif qui peut trouver son application dans le domaine de l'étiquetage électronique RFID (pour « Radio Frequency Identification » selon la terminologie anglo-saxonne).

D'une manière générale, un dispositif radiofréquence comprend une puce d'émission-réception associée à une antenne. Le document précité rappelle que selon la fréquence de transmission utilisée entre un terminal d'émission-réception et le dispositif radiofréquence, l'antenne de ce dispositif est configurée pour former soit une boucle (pour des fréquences de transmission comprises entre quelques centaines de kilohertz et quelques mégahertz), soit configurée pour former un dipôle (pour des fréquences de transmission comprises entre quelques mégahertz et quelques gigahertz).

Plus précisément, le document US8471773 divulgue un dispositif d'émission-réception radiofréquence comportant une antenne constituée de deux éléments filaires, et d'une puce d'émission réception comportant deux rainures longitudinales de connexion dans lesquels deux segments des éléments filaires sont respectivement logés.

Cette technologie de connexion, particulièrement ingénieuse, est désignée par la dénomination commerciale E-THREAD™. Elle est par exemple décrite dans les documents US8093617, US8723312, US2015318409, US8782880, US8814054 ou US2015230336.

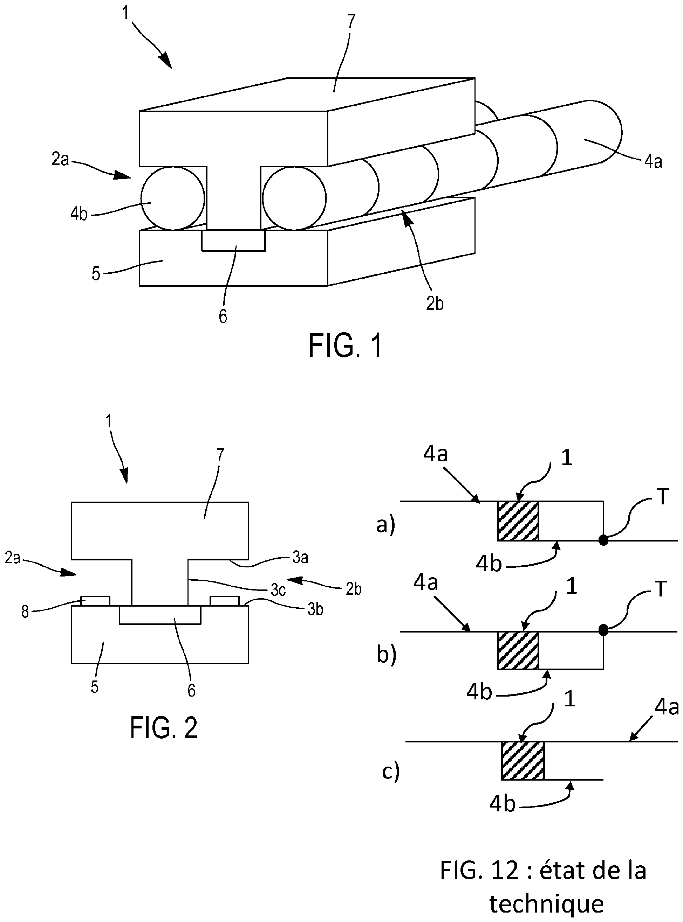

En référence aux figures 12a à 12c, cette technologie peut être exploitée selon les enseignements du document US8471773 précité pour associer une puce d'émission-réception 1 avec deux éléments filaires 4a, 4b formant antenne, dans des configurations favorisant l'adaptation de l'impédance de l'antenne à celle de la puce. Ainsi, et à titre d'exemple de tels configurations, les figures 12a et 12b, représentent schématiquement les deux éléments filaires 4a, 4b, logés dans des rainures longitudinales de la puce 1, électriquement reliés l'un à l'autre au niveau d'une zone d'interconnexion T. Dans ces deux configurations représentées, l'antenne comporte une boucle favorisant l'adaptation de l'impédance de l'antenne à celle de la puce. La figure 12c représente une configuration alternative ne nécessitant pas de relier électriquement les deux éléments filaires l'un à l'autre pour favoriser l'adaptation de l'impédance de l'antenne à celle de la puce.

Pour obtenir un dispositif d'émission-réception comportant une antenne en forme de boucle ou comprenant une boucle, le document US8471773 prévoit de fournir une chaîne de puces d'émission-réception reliées conformément à la technologie E-THREAD, à deux fils conducteurs, puis de placer un élément intermédiaire entre deux puces de la chaîne pour mettre en contact électrique les deux fils, et de découper les fils conducteurs et l'élément intermédiaire. La découpe de l'élément intermédiaire forme un tronçon conducteur entre les deux fils, l'ensemble constitué des deux portions de fils et du tronçon conducteur définissant la boucle de l'antenne.

Bien que tout à fait efficace, cette approche présente des limitations. En premier lieu, outre les moyens additionnels nécessaires pour placer des éléments conducteurs aux endroits dédiés sur la chaîne de puces, elle nécessite de doubler les moyens de découpe : l'un pour couper les fils conducteurs au plus proche de la puce ; et l'autre pour couper l'élément conducteur et former le tronçon conducteur entre les deux fils. La mise en œuvre industrielle du procédé de découpe est donc complexe.

### OBJET DE L'INVENTION

La présente invention vise à pallier tout ou partie des inconvénients précités.

### BREVE DESCRIPTION DE L'INVENTION

L'objet de l'invention propose un dispositif d'émission-réception radiofréquence selon la première revendication.

Le dispositif est remarquable en ce qu'il comprend une deuxième puce de bouclage comportant deux rainures longitudinales de connexion, un deuxième segment de chaque élément filaire étant respectivement logé dans l'une et l'autre des rainures de la deuxième puce. La deuxième puce comporte un circuit de bouclage permettant de relier électriquement les deux éléments filaires entre eux de sorte que l'antenne du dispositif comprenne une boucle.

Selon d'autres caractéristiques avantageuses et non limitatives de l'invention, prises seules ou selon toute combinaison techniquement réalisable :
- le premier segment est situé au niveau de la première extrémité de chaque élément filaire ; et le deuxième segment est situé au niveau de la seconde extrémité de chaque élément filaire ;
- le premier segment du premier élément filaire est situé au niveau d'une extrémité du premier élément filaire ; le deuxième segment du premier élément filaire est situé au niveau de la partie centrale du premier élément filaire ; le premier segment du deuxième élément filaire est situé au niveau de la partie centrale du deuxième élément filaire ; et le deuxième segment du deuxième élément filaire est situé au niveau d'une extrémité du deuxième élément filaire ;

- le premier segment et le deuxième segment du premier élément filaire sont situés au niveau de la partie centrale du premier élément filaire ; le premier segment et le deuxième segment du deuxième élément filaire sont situés chacun à une extrémité du deuxième élément filaire ;
- le dispositif comprend une troisième puce comportant deux rainures longitudinales de connexion, un troisième segment de chaque élément filaire étant respectivement logé dans l'une et l'autre des rainures de la troisième puce ;
- le dispositif comprend une troisième puce d'émission réception ou de bouclage, disposée entre la première puce et la deuxième puce, comportant deux rainures longitudinales de connexion ; un troisième segment de chaque élément filaire étant respectivement logé dans l'une et l'autre des rainures de la troisième puce, ce troisième segment étant situé dans la partie centrale de chaque élément filaire ;
- la longueur du premier élément filaire comprise entre la première puce d'émission réception et la deuxième puce de bouclage est différente de la longueur du second élément filaire comprise entre la première puce d'émission-réception et la deuxième puce de bouclage.
- le premier élément filaire est d'une nature distincte du second élément filaire.
- le circuit de bouclage de la seconde puce comprend des éléments passifs résistif et/ou capacitif et/ou inductif ;
- le circuit de bouclage est formé d'une piste métallique mettant en contact électrique le premier élément filaire et le second élément filaire ;
- la deuxième puce de bouclage comprend un circuit actif ;
- la deuxième puce de bouclage comprend un capteur d'un paramètre d'environnement du dispositif.

Selon un autre aspect l'objet de l'invention propose une chaîne de dispositifs radiofréquences selon la revendication 13.

La chaîne est remarquable en ce qu'elle comporte une pluralité de puces de bouclage comportant chacune deux rainures longitudinales de connexion, chaque élément filaire de grande longueur étant respectivement logé dans l'une et l'autre des rainures de chaque puce de bouclage; les puces de bouclage comportant chacune un circuit de bouclage reliant électriquement les deux éléments filaires de grandes longueurs entre eux.

Selon un caractéristique avantageuse, les puces d'émission-réception et les puces de bouclage sont disposées en alternance les unes des autres le long des deux éléments filaires de la chaîne de grande longueur.

### BREVE DESCRIPTION DES DESSINS

D'autres caractéristiques et avantages de l'invention ressortiront de la description détaillée de l'invention qui va suivre en référence aux figures annexées sur lesquelles :
- La figure 1 représente une vue en perspective d'une puce d'un dispositif compatible avec l'invention ;
- La figure 2 représente une vue en coupe d'une puce d'un dispositif compatible avec l'invention ;
- Les figures 3a à 3e représentent, à titre d'exemple, une méthode de fabrication d'une puce d'un dispositif compatible avec l'invention ;
- La figure 4 représente un dispositif d'émission réception radiofréquence compatible avec l'invention.
- La figure 5 représente un premier mode de mise en œuvre de l'invention.
- Les figures 6a et 6b représentent deux variantes possibles d'un deuxième mode de mise en œuvre de l'invention.
- Les figures 7a à 7d représentent deux variantes d'un troisième mode de mise en œuvre de l'invention.
- Les figures 8a et 8b représentent deux variantes possibles d'un quatrième mode de mise en œuvre de l'invention.
- Les figures 9a et 9b représentent deux variantes d'un cinquième mode de mise en œuvre de l'invention.
- La figure 10 représente un exemple particulier de mise en œuvre de l'invention.
- La figure 11 représente une chaine de dispositifs radiofréquences.
- Les figures 12a à 12c représentent des dispositifs d'émission-réception de l'état de la technique.

### DESCRIPTION DETAILLEE DE L'INVENTION

La figure 1 représente une vue en perspective d'un composant électronique ou d'une puce 1 compatible avec la technologie de connexion E-THREAD™. Sur cette figure 1, la puce 1 est assemblée à deux éléments filaires conducteurs 4a, 4b (et parfois désignés plus simplement « éléments filaires » dans la suite de cette description). La figure 2 représente quant à elle une vue en coupe de la puce 1, sans les éléments filaires 4a, 4b.

La puce 1 comporte deux rainures longitudinales 2a, 2b, chacune de ces rainures étant définie par trois parois 3a, 3b, 3c des éléments constituant la puce 1, sur l'exemple représenté. Chaque rainure 2a, 2b est prévue pour loger un segment d'un élément filaire 4a, 4b. Chaque élément filaire 4a, 4b présente un axe principal, parallèle à l'axe de la rainure longitudinale 2a, 2b dans lequel il est logé.

Chaque élément filaire 4a, 4b peut-être mécaniquement encastré dans une des rainures longitudinales 2a, 2b et/ou maintenu par un adhésif, par soudure ou par tout autre moyen dans cette rainure. Dans tous les cas, les éléments filaires 4a, 4b et la puce sont assemblés l'un à l'autre de manière solidaire.

Comme cela est représenté sur les figures 1 et 2, la puce 1 peut comprendre un substrat 5 sur et dans lequel peut être formé un circuit fonctionnel 6. Une au moins des parois 3a, 3b, 3c de chaque rainure longitudinale 2a, 2b peut être munie d'un plot 8 ou d'une pluralité de tels plots. Lorsque les éléments filaires 4a, 4b sont logés dans leurs rainures 2a, 2b, ils sont en contact avec le ou les plots 8 positionnés dans cette rainure. Ces plots 8 peuvent contribuer à l'encastrement de l'élément filaire dans la rainure. Certains de ces plots 8 peuvent être électriquement reliés à des bornes du circuit fonctionnel 6, et donc former des plots de connexion, par exemple par l'intermédiaire de pistes conductrices formées sur ou dans le substrat 5.

Lorsqu'il y a lieu de former un contact électrique entre un élément filaire 4a, 4b et un plot de connexion 8, il peut être nécessaire de préalablement dénuder l'élément filaire conducteur 4a, 4b, si celui-ci est muni d'une gaine isolante. Alternativement ou en complément, le plot de connexion 8 peut avoir une forme de lame tranchante qui perce la gaine lors de l'insertion du fil afin d'établir le contact électrique.

Poursuivant la description des figures 1 et 2, la puce 1 peut également comprendre un capot 7, par exemple présentant une section en forme de T comme cela est représenté sur la figure 2, assemblé avec une face du substrat 5. L'assemblage du capot 7 en forme de T et du substrat 5 permet de constituer les rainures longitudinales 2a, 2b. Le capot 7 peut également être muni d'un circuit fonctionnel, de plots 8 et de pistes conductrices reliées électriquement au circuit fonctionnel 6 du substrat 5 ou au circuit fonctionnel du capot 7 dans le cas où un tel circuit est présent.

D'autres modes de réalisation de la puce 1 que celui représenté sur les figures 1 et 2 sont possibles. Par exemple, la puce 1 peut être formée d'un support plan comportant le circuit fonctionnel, les rainures longitudinales étant formées, par exemple par gravure, sur deux faces latérales opposées de ce support, ou sur l'une et/ou l'autre des faces principales de ce support.

Selon un autre mode de réalisation, la puce 1 peut être formée de deux supports plans de dimensions identiques ou similaires, comportant l'un et/ou l'autre un circuit fonctionnel. Les supports plans sont assemblés chacun aux deux faces opposées d'une entretoise de plus petite dimension, pour définir les deux rainures longitudinales 2a, 2b de la puce 1.

Quel que soit le mode de réalisation choisi, la puce 1 présente, dans le cadre de la présente invention, un circuit fonctionnel 6, deux rainures longitudinales de connexion 2a, 2b aptes à loger et maintenir chacune un segment d'un élément filaire conducteur 4a, 4b. Les éléments filaires conducteurs 4a, 4b sont en contact électrique avec le circuit fonctionnel 6.

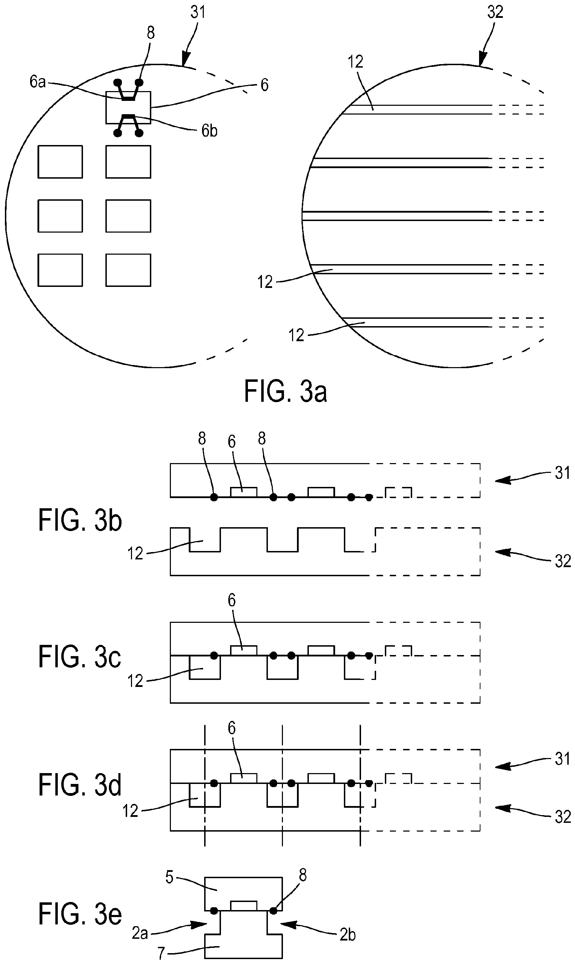

La puce 1 peut être avantageusement fabriquée en grande série. À titre d'exemple, et comme représenté sur la figure 3a, on peut disposer d'une plaquette de semi-conducteurs 31 sur laquelle a été préalablement fabriquée, selon les technologies traditionnelles de fabrication de circuits intégrés, une pluralité de circuits fonctionnels 6. Il peut s'agir de circuits intégrés actifs (par exemple des circuits RFID, des capteurs, etc) ou de circuits passifs (résistance, capacité, simple liaison électrique, inductance). Sur cette plaquette de circuits, à proximité des circuits fonctionnels, on peut former par lithographie, dépôt, croissance, des plots 8 et des pistes conductrices reliés aux bornes d'entrée-sortie 6a, 6b du circuit fonctionnel 6.

On peut préparer d'autre part un second substrat 32 qui présente préférentiellement les mêmes dimensions que celui de la plaquette 31. Sur ce second substrat 32, on peut former par lithographie et/ou gravure des gorges de surface 12, parallèles entre elles, et séparées d'une distance sensiblement égale à la dimension d'une puce 1. Le second substrat 32 peut également être muni d'un circuit fonctionnel.

Comme cela est indiqué sur les figures 3b à 3d, la plaquette 31 de semi-conducteurs comprenant les circuits fonctionnels et le second substrat 32 sont alors alignés (figure 3b) et assemblés (figure 3c), par exemple par collage adhésif, puis découpés (selon le trait en pointillé de la figure 3d) pour former la pluralité de puces 1 (dont un exemplaire est représenté sur la figure 3e).

L'insertion des éléments filaires conducteurs 4a, 4b dans les rainures longitudinales 2a, 2b d'une puce 1 peut être automatisée, par exemple à l'aide d'un équipement d'insertion tel que celui décrit dans le document US8782880.

Des éléments filaires de grandes dimensions peuvent être fournis dans l'équipement sous la forme de bobines ; et les puces 1, similaires à celle qui vient d'être présentée, stockées dans un réservoir de l'équipement. Les éléments filaires de grande dimension sont dévidés des bobines pour être amenés, parallèles l'un à l'autre, au niveau d'une zone de pincement de l'équipement. Celui-ci est également configuré pour amener successivement des puces 1 issues du réservoir au niveau de cette zone de pincement et pour engager un segment de chaque élément filaire de grande dimension dans l'une et l'autre des rainures longitudinales 2a, 2b. On forme de la sorte une chaîne composée d'une pluralité de puces 1 reliées par les éléments filaires de grandes dimensions. L'équipement peut être muni d'une pluralité de réservoirs pour y stocker des puces de natures différentes et former une chaîne de puces composites selon une alternance qui peut être choisie. La chaîne de puces peut être enroulée sur un support pour former une bobine, en vue de son stockage et son transport. Des éléments fonctionnels, c'est-à-dire des tronçons de cette chaîne, peuvent être prélevés de la bobine, en découpant les éléments filaires 4a, 4b suivant un motif désiré de découpe, comme cela est décrit dans le document US8471773 précité.

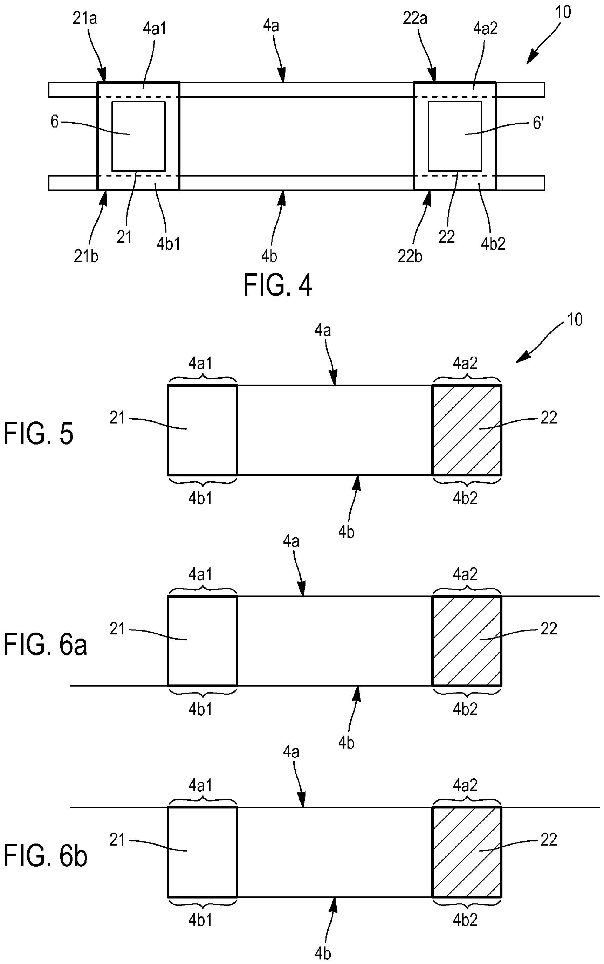

La présente invention met à profit les caractéristiques générales de la technologie qui vient d'être présentée, pour proposer un dispositif d'émission réception radiofréquence 10. Un tel dispositif est représenté sur la figure 4.

Selon l'invention, le dispositif d'émission réception 10 comprend une première puce 21 comportant deux rainures longitudinales de connexion 21a, 21b. Il comprend également deux éléments filaires conducteurs 4a, 4b contribuant à former une antenne du dispositif 10.

Un premier segment 4a1 du premier élément filaire 4a (représenté sous forme pointillée sur la figure 4) est logé dans la rainure 21a à de la première puce 21. Similairement, un premier segment 4b1 du second élément filaire 4b est logé dans l'autre rainure 21b de la première puce 21.

Cette première puce 21 est une puce d'émission réception, qui, à cet effet, comporte un circuit fonctionnel 6 de traitement de signaux radiofréquences. Ce circuit de traitement est électriquement relié aux éléments filaires 4a, 4b formant l'antenne, par exemple par l'intermédiaire de plots de connexion et de pistes conductrices comme cela a été exposé précédemment (et non représentés sur cette figure 4).

Le dispositif d'émission réception 10 comprend également une seconde puce 22 comportant deux rainures longitudinales de connexion 22a, 22b. Un deuxième segment 4a2 du premier élément filaire 4a (représenté sous forme pointillée sur la figure 4) est logé dans la rainure 22a de la deuxième puce 22. Similairement, un deuxième segment 4b2 du deuxième élément filaire 4b est logé dans l'autre rainure 22b de la deuxième puce 22.

Cette deuxième puce 22 est une puce de bouclage qui comporte un circuit, dit « circuit de bouclage » 6′, dont la fonction est de relier électriquement les deux éléments filaires l'un à l'autre. À cet effet, la deuxième puce 22 peut être munie de plots de connexion 8 et de pistes conductrices comme cela a été exposé précédemment (et non représentés sur cette figure 4).

On forme de la sorte un dispositif d'émission réception 10 comprenant un circuit fonctionnel 6 de traitement de signaux radiofréquences raccordé à une antenne comportant une boucle. Cette boucle est constituée des deux éléments filaires 4a, 4b et du circuit de bouclage 6′ qui les relie électriquement l'un à l'autre.

En d'autres termes, le dispositif 10 comprend la première puce 21 et la deuxième puce 22 reliées entre elles par l'intermédiaire les éléments filaires conducteurs 4a, 4b insérés dans les rainures de connexion de chacune des deux puces 21, 22.

La fabrication du dispositif 10 ne nécessite pas d'employer des éléments intermédiaires additionnels comme cela était le cas dans la solution de l'état de la technique. Un unique équipement d'insertion des éléments filaires dans les rainures des puces pour sa fabrication, par exemple du type présenté antérieurement.

La première puce 21 peut-être une puce RFID, c'est-à-dire que son circuit fonctionnel 6 comprend un circuit d'émission réception d'un signal radiofréquence permettant d'identifier l'objet sur lequel le dispositif 10 est apposé.

La fonction du circuit de bouclage 6′ de la deuxième puce 22 est de relier électriquement les deux éléments filaires 4a, 4b entre eux.

Dans son expression la plus simple, cette fonction est réalisée par un court-circuit entre les deux éléments filaires 4a, 4b, par exemple en formant une simple piste conductrice entre des plots 8 disposés dans chacune des rainures 22a, 22b, avec lesquels les éléments filaires 4a, 4b sont en contact électrique.

Le circuit de bouclage 6' peut toutefois être plus sophistiqué, et comporter d'autres éléments, par exemple des éléments passifs comme des capacités, des inductances, des résistances, en éléments distribués ou intégrés. On peut de la sorte placer dans la boucle de l'antenne, une impédance choisie de sorte à ajuster au mieux son impédance à celle du circuit radiofréquence de la première puce 21.

La liaison électrique entre les deux éléments filaires 4a, 4b peut être réalisée par couplage électromagnétique. À titre d'exemple, les éléments filaires conducteurs 4a, 4b peuvent être connectés chacun a une piste métallique du circuit de bouclage 6'. Ces deux pistes métalliques, coplanaires et parallèles entre elles, forment des lignes de transmission couplant électro magnétiquement les deux éléments filaires 4a, 4b l'un à l'autre.

Dans d'autres variantes possibles, la puce de bouclage peut intégrer d'autres fonctions. La puce de bouclage peut ainsi comporter un circuit actif, intégré au circuit de bouclage 6′ lui-même ou plus généralement intégré dans la puce de bouclage, par exemple dans son capot 7 ou dans son substrat 5.

À titre d'exemple, le circuit actif peut consister en, ou comporter, un capteur de température et/ou d'humidité permettant d'ajuster l'impédance du circuit de bouclage, selon la température et/ou l'humidité mesurée de l'environnement. La portée d'une transmission entre un terminal d'émission réception et le dispositif 10 étant affectés par ces variations d'environnement, la configuration proposée permet de compenser ces variations et de disposer d'une portée maximale en toutes conditions.

Outre sa fabrication particulièrement simple, le dispositif 10 présente également l'avantage de pouvoir être configuré pour former différents types d'antennes, et donc servir différents types d'application.

Ainsi, selon un premier mode de mise en œuvre, le dispositif d'émission réception 10 comprend une antenne en forme d'une boucle simple.

Pour ce faire, le premier segment 4a1 (respectivement le premier segment 4b1) du premier élément filaire 4a (respectivement du second élément filaire 4b), logé dans la première puce 21, est situé à une première extrémité du premier élément filaire 4a (respectivement du second élément filaire 4b). Similairement, le deuxième segment 4a2 (respectivement le deuxième segment 4b2) du premier élément filaire 4a (respectivement du second élément filaire 4b), logé dans la deuxième puce de bouclage 22, est situé au niveau de la seconde extrémité du premier élément filaire 4a (respectivement du second élément filaire 4b).

Cette configuration est représentée schématiquement sur la figure 5. On observe bien que, partant de la puce d'émission réception 21, l'antenne constituée du premier élément filaire 4a, de la puce de bouclage 22 (reliant électriquement les deux éléments filaires 4a, 4b l'un à l'autre) et du deuxième élément filaire 4b forme bien une boucle.

Le dispositif 10 de ce premier mode de réalisation, particulièrement simple de constitution, convient lorsque la fréquence de transmission entre ce dispositif 10 et un terminal d'émission réception est compris dans une gamme de fréquences basses, par exemple entre quelques centaines de kilohertz et quelques mégahertz. La longueur de la boucle, et donc la gamme de fréquences de transmission, peut être choisie en ajustant la longueur de l'un et/ou de l'autre des éléments filaires conducteurs 4a, 4b, au cours de la fabrication du dispositif.

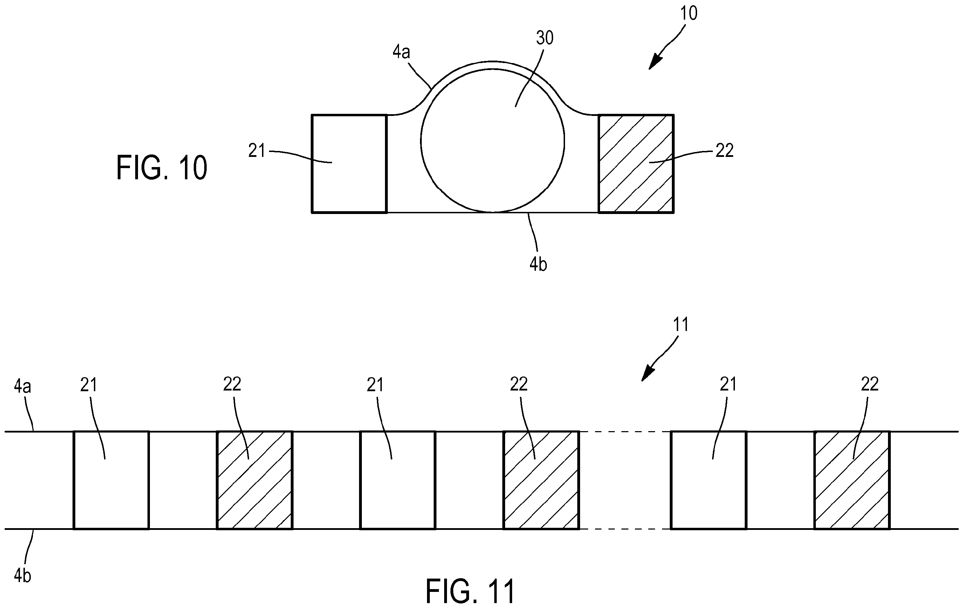

Le dispositif 10 peut être réalisé avec facilité. On forme tout d'abord une chaîne de puces 11, reliées entre elles par l'intermédiaire de deux éléments filaires conducteurs de grandes longueurs 4A, 4B comme cela a été exposé antérieurement. Une représentation d'une telle chaîne 11 est représentée sur la figure 11. Les puces d'émission réception 21 et les puces de bouclage 22 peuvent être disposées en alternance les unes des autres le long de ces deux éléments filaires. Il suffit alors de découper les éléments filaires 4A, 4B au plus près de la première puce 21 et de la deuxième puce 22 pour former un dispositif 10 conforme à ce premier mode de mise en œuvre.

La figure 6a représente schématiquement un dispositif radiofréquence 10 selon un deuxième mode de mise en œuvre de l'invention.

Le dispositif 10 représenté sur cette figure comporte une antenne constituée d'un dipôle rayonnant couplé à une boucle, en sortie de la puce 21 d'émission réception.

Le premier segment 4a1 du premier élément filaire 4a, logé dans la rainure de la première puce d'émission réception 21 est situé au niveau d'une extrémité de l'élément filaire 4a. Le deuxième segment 4a2, logé dans une rainure de la puce de bouclage 22, est situé au niveau d'une partie centrale du premier élément filaire 4a. Similairement, le premier segment 4b1 du deuxième élément filaire 4b, logé dans l'autre rainure de la puce d'émission réception 21, est situé au niveau d'une partie centrale du deuxième élément filaire 4b. Et le deuxième segment 4b2, logé dans l'autre rainure de la deuxième puce de bouclage 22, est situé au niveau d'une extrémité du deuxième élément filaire 4b.

On désigne, dans la présente demande, par « partie centrale » d'un élément filaire, toute section comprise entre les deux extrémités de cet élément filaire et distante de ces deux extrémités. Lorsqu'un élément filaire est encastré dans la rainure longitudinale d'une puce au niveau d'un segment situé dans sa partie centrale, il s'étend de part et d'autre de cette puce.

Un dispositif 10 conforme au deuxième mode de mise en œuvre de l'invention peut être réalisé simplement et de manière tout à fait similaire à la méthode exposée dans le cadre du premier mode de mise en œuvre.

Comme cela est bien connu en soi, une antenne d'un dispositif d'émission réception couplant un dipôle rayonnant et une boucle est avantageux en ce qu'il permet d'ajuster l'impédance de l'antenne à l'impédance d'entrée et/ou sortie du circuit d'émission réception sur une large bande de fréquences et/ou rendre le dispositif moins sensible aux perturbations électromagnétiques de l'environnement proche.

La présente invention fournit un moyen particulièrement simple de réaliser un dispositif d'émission réception 10 disposant de telles propriétés d'adaptation en fréquence et/ou de robustesse aux perturbations électromagnétiques provenant de l'environnement.

Par exemple, lorsque le dispositif 10 est une étiquette RFID, l'antenne couplant un dipôle rayonnant à une boucle, comme celle du deuxième mode de réalisation, permet de doubler, voire de tripler la distance d'émission réception séparant l'émetteur de l'étiquette, comparée à une antenne formée d'un simple dipôle.

La figure 6b représente une variante du deuxième mode de mise en œuvre permettant d'associer un dipôle rayonnant à une boucle pour former une antenne d'un dispositif 10 d'émission réception.

Dans cette variante, le premier segment 4a1 et le deuxième segment 4a2 du premier élément filaire 4a sont tous deux situés au niveau de la partie centrale de ce premier élément filaire 4a. Le premier segment 4b1 et le deuxième segment 4b2 sont quant à eux situés chacun à une extrémité du deuxième élément filaire 4b. Cette variante est particulièrement avantageuse en ce qu'elle forme un dispositif 10 robuste mécaniquement : lorsque des efforts conduisent à étirer les extrémités libres de l'élément filaire 4a, il y a peu de sollicitations mécaniques au niveau des rainures. Et on évite de la sorte de déloger les éléments filaires de ces rainures.

L'invention n'est nullement limitée à un dispositif d'émission réception 10 présentant une unique puce de bouclage 22 et/ou une unique puce d'émission réception 21. On pourra ainsi prévoir d'incorporer dans le dispositif au moins une troisième puce 23. Avantageusement, cette troisième puce 23 comporte deux rainures longitudinales de connexion 23a, 23b et un troisième segment 4a3, 4b3 de chaque élément filaire 4a, 4b est respectivement logé dans l'une et l'autre des rainures 23a, 23b de la troisième puce 23. On pourra de la sorte intégrer cette troisième puce 23 au dispositif d'émission réception 10 avec les mêmes moyens que ceux utilisés pour assembler la première et la seconde puce 21, 22 aux éléments filaires 4a, 4b.

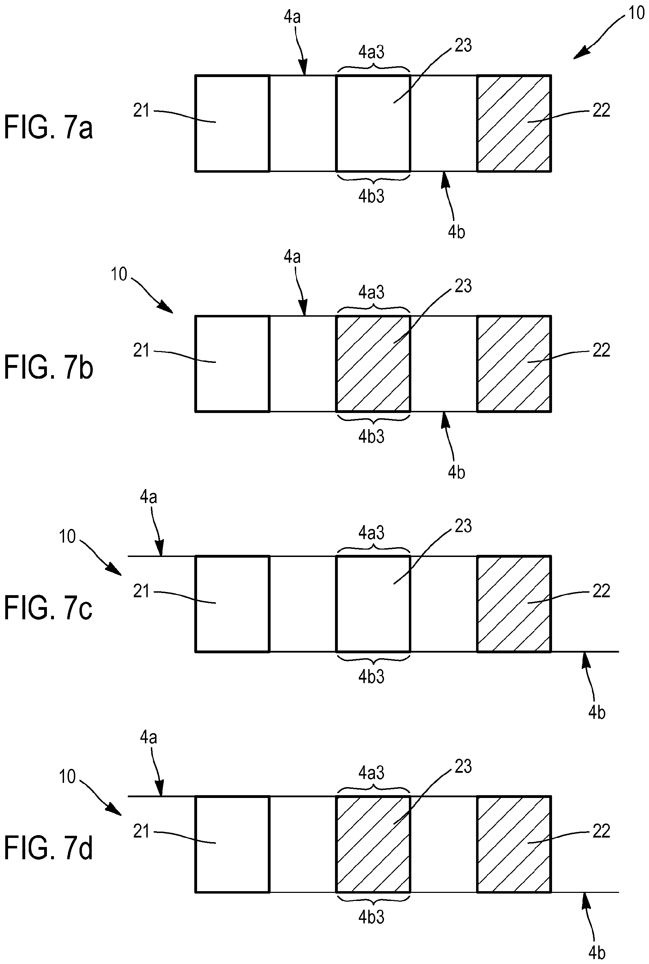

Ainsi, on a représenté sur les figures 7a à 7d un troisième mode de mise en œuvre de l'invention. Ce troisième mode de mise en œuvre correspond aux configurations du dispositif 10 selon le premier et deuxième mode de mise en œuvre, et dans lequel est disposé une troisième puce 23 entre la première puce 21 et la deuxième puce 22.

Les troisièmes segments 4a3, 4b3, logés dans chacune des rainures de la puce 23, sont dans ce cas situés dans la partie centrale de chaque élément filaire 4a, 4b.

La figure 7a (respectivement, la figure 7b) correspond à la configuration du dispositif présentant une antenne en boucle, dans laquelle est disposée une troisième puce d'émission réception 23 (respectivement, une troisième puce de bouclage 23).

La figure 7c (respectivement la figure 7d) correspond à la configuration du dispositif 10 présentant une antenne associant un dipôle rayonnant et une boucle, dans laquelle est disposée une troisième puce d'émission réception 23 (respectivement, une troisième puce de bouclage 23).

Dans les configurations des figures 7a et 7c, pour lesquelles la troisième puce 23 est une puce d'émission réception, on note que chacune des puces 21 et 23 d'émission réception est couplée à une antenne en boucle de longueur distincte, et donc adaptée à des gammes de fréquences de transmission spécifiques avec un terminal d'émission réception distant. On dispose ainsi d'un dispositif 10 d'émission réception avantageusement utilisable avec une variété de terminaux et de standards de transmission.

Dans les configurations des figures 7b et 7d, la troisième puce 23 est une puce de bouclage. Cette configuration est particulièrement utile pour optimiser le fonctionnement de l'antenne sur une très large bande de fréquence ou dans des bandes de fréquence multiples.

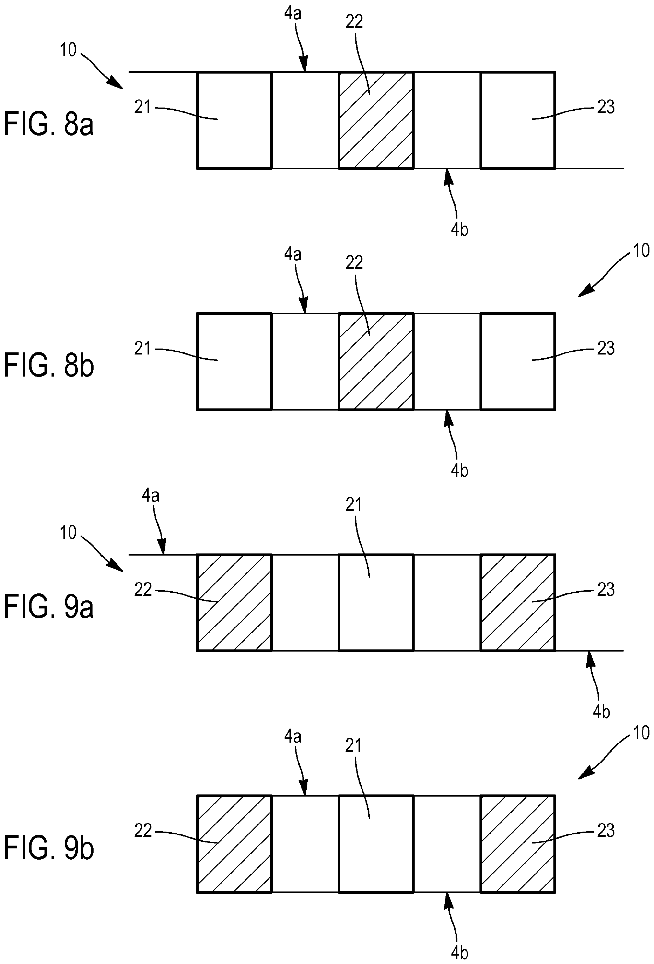

Les figures 8a et 8b représentent un quatrième mode de mise en œuvre de l'invention. Le dispositif 10 comporte une première puce d'émission réception 21 et une troisième puce d'émission réception 23. Il comporte également une puce de bouclage 22. Dans le quatrième mode de mise en œuvre, la deuxième puce de bouclage 22 est disposée entre la première puce d'émission réception 21 et la troisième puce d'émission réception 23. La figure 8a correspond à une configuration d'antenne associant un dipôle rayonnant à une boucle ; et la figure 8b correspond à une configuration d'antenne en boucle simple.

Préférentiellement, la longueur de la boucle associée à la première puce d'émission réception 21 est différente de la longueur de la boucle associée à la troisième puce d'émission réception 23. Ceci peut être réalisé en ajustant les longueurs des éléments filaires compris entre chacune des puces 21, 22, 23.

Comme cela a déjà été décrit en relation avec les configurations représentées sur les figures 7a et 7c, le quatrième mode de mise en œuvre est avantageux en ce qu'il propose un dispositif d'émission réception 10 présentant une redondance des fonctions d'émission-réception (par l'intermédiaire des puces d'émission réception 21 et 23) qui peuvent, en ajustant la longueur de chacune des boucles qui leurs sont associées, être ajustées à des gammes de fréquences de transmission différentes.

Les figures 9a et 9b représentent un cinquième mode de mise en œuvre de l'invention. Le dispositif 10 comporte, dans ce cinquième mode, une deuxième puce de bouclage 22 et une troisième puce de bouclage 23. Il comporte également la première puce d'émission réception 21 disposée entre la deuxième puce de bouclage 22 et la troisième puce de bouclage 23.

La figure 9a correspond à une configuration d'antenne associant un dipôle rayonnant à deux boucles. La figure 9b correspond à une configuration d'antenne comprenant deux simples boucles.

Préférentiellement, les longueurs des boucles associées à la première puce d'émissions réception sont différentes l'une de l'autre. Cette configuration est avantageuse en ce qu'elle permet de faire fonctionner le circuit d'émission-réception à des fréquences différentes.

Bien entendu, l'invention n'est pas limitée aux modes de mise en œuvre qui viennent d'être décrits, et on peut y apporter des variations de réalisation sans sortir du cadre de l'invention telle que définie par les revendications.

Bien que l'on ait représenté sur les figures annexées des éléments filaires 4a, 4b sensiblement de même longueur, on peut envisager d'employer des éléments filaires présentant des longueurs différentes. Il peut également s'agir d'éléments filaires de natures différentes. Ainsi, et comme cela représenté sur la figure 10, cette disposition permet de glisser le dispositif 10 autour d'un objet 30 avec lequel il peut être solidarisé.

Bien qu'on ait indiqué que la troisième puce 23 soit préférentiellement une puce d'émission-réception ou une puce de bouclage, celle-ci peut incorporer en complément (ou en remplacement) des fonctions déjà décrites, n'importe quelles autres fonctions.

De plus, l'invention n'est nullement limitée à un dispositif 10 présentant uniquement deux éléments filaires. On peut ainsi prévoir des éléments filaires additionnels, associés à des rainures additionnelles qui peuvent être formées sur l'une et/ou l'autre des puces d'émission réception 21 ou de bouclage 23, selon le besoin ou la circonstance.

## Revendications

1. Dispositif d'émission-réception radiofréquence (10) comprenant :
- un premier et un deuxième élément filaire conducteur (4a, 4b) formant une antenne du dispositif (10), et comportant chacun une première, une seconde extrémité et une partie centrale ;
- une première puce d'émission-réception (21) comprenant des circuits de traitement radiofréquence (6), et deux rainures longitudinales de connexion (21a, 21b) ; un premier segment (4a1, 4b1) de chaque élément filaire étant respectivement logé dans l'une et l'autre des rainures (21a, 21b) de la première puce ;
le dispositif (10) étant **caractérisé en ce qu'**il comprend une deuxième puce de bouclage (22) comportant deux rainures longitudinales de connexion (22a, 22b); un deuxième segment (4a2, 4b2) de chaque élément filaire étant respectivement logé dans l'une et l'autre des rainures (22a, 22b) de la deuxième puce (22) ; et **en ce que** la deuxième puce (22) comporte un circuit de bouclage (6') permettant de relier électriquement les deux éléments filaires (4a, 4b) entre eux de sorte que l'antenne du dispositif comprenne une boucle.

2. Dispositif (10) selon la revendication 1 dans lequel le premier segment (4a1, 4b1) est situé au niveau de la première extrémité de chaque élément filaire (4a, 4b) ; et dans lequel le deuxième segment (4a2, 4b2) est situé au niveau de la seconde extrémité de chaque élément filaire (4a, 4b).

3. Dispositif (10) selon la revendication 1 dans lequel
- le premier segment (4a1) du premier élément filaire (4a) est situé au niveau d'une extrémité du premier élément filaire (4a) ; et le deuxième segment (4a2) du premier élément filaire (4a) est situé au niveau de la partie centrale du premier élément filaire (4a) ;
- le premier segment (4b1) du deuxième élément filaire (4b) est situé au niveau de la partie centrale du deuxième élément filaire (4b); et le deuxième segment (4b2) du deuxième élément filaire (4b) est situé au niveau d'une extrémité du deuxième élément filaire (4b).

4. Dispositif (10) selon la revendication 1 dans lequel le premier segment (4a1) et le deuxième segment (4a2) du premier élément filaire (4a) sont situés au niveau de la partie centrale du premier élément filaire (4a) ; le premier segment (4b1) et le deuxième segment (4b2) du deuxième élément filaire (4b) sont situés chacun à une extrémité du deuxième élément filaire (4b).

5. Dispositif (10) selon la revendication 1 comprenant une troisième puce (23) comportant deux rainures longitudinales de connexion, un troisième segment (4a3, 4b3) de chaque élément filaire (4a, 4b) étant respectivement logé dans l'une et l'autre des rainures de la troisième puce.

6. Dispositif (10) selon l'une des revendications 2 à 4 comprenant une troisième puce d'émission réception ou de bouclage (23), disposée entre la première puce (21) et la deuxième puce (22), et comportant deux rainures longitudinales de connexion ; un troisième segment (4a3, 4b3) de chaque élément filaire (4a, 4b) étant respectivement logé dans l'une et l'autre des rainures de la troisième puce (23), ce troisième segment étant situé dans la partie centrale de chaque élément filaire (4a, 4b).

7. Dispositif (10) selon l'une des revendications précédentes dans lequel la longueur du premier élément filaire comprise entre la première puce d'émission réception (21) et la deuxième puce de bouclage (22) est différente de la longueur du second élément filaire comprise entre la première puce d'émission-réception (21) et la deuxième puce de bouclage (22).

8. Dispositif (10) selon l'une des revendications précédentes dans lequel le premier élément filaire (4a) est d'une nature distincte du second élément filaire (4b).

9. Dispositifs (10) selon l'une des revendications précédentes dans lequel le circuit de bouclage de la seconde puce (22) comprend des éléments passifs résistif et/ou capacitif et/ou inductif ;

10. Dispositif (10) selon la revendication précédente dans lequel le circuit de bouclage est formé d'une piste métallique mettant en contact électrique le premier élément filaire et le second élément filaire.

11. Dispositif (10) selon l'une des revendications précédentes dans lequel la deuxième puce de bouclage (22) comprend un circuit actif.

12. Dispositif (10) selon l'une des revendications précédentes dans lequel la deuxième puce de bouclage (22) comprend un capteur d'un paramètre d'environnement du dispositif.

13. Chaîne (11) de dispositifs radiofréquences comprenant :
- deux éléments filaires conducteurs de grandes longueurs (4A, 4B);
- une pluralité de puces d'émission-réception (21) comprenant chacune un circuit de traitement radiofréquence et deux rainures longitudinales de connexion ; chaque élément filaire de grande longueur (4A, 4B) étant respectivement logé dans l'une et l'autre des rainures de chaque puce d'émission-réception (21);
la chaîne étant **caractérisée en ce qu'**elle comporte une pluralité de puces de bouclage (22) comportant chacune deux rainures longitudinales de connexion, chaque élément filaire de grande longueur (4A, 4B) étant respectivement logé dans l'une et l'autre des rainures de chaque puce de bouclage (22); les puces de bouclage (22) comportant chacune un circuit de bouclage reliant électriquement les deux éléments filaires de grandes longueurs (4A, 4B) entre eux.

14. Chaîne (11) de dispositifs radiofréquences selon la revendication précédente dans laquelle les puces d'émission-réception (21) et les puces de bouclage (22) sont disposées en alternance les unes des autres le long des deux éléments filaires de grandes longueurs (4A, 4B).

## Patentansprüche

1. Hochfrequenz-Transceiver-Vorrichtung (10), umfassend:
- ein erstes und ein zweites leitendes Drahtelement (4a, 4b), die eine Antenne der Vorrichtung (10) bilden und jeweils ein erstes, ein zweites Ende und einen mittleren Abschnitt aufweisen;
- einen ersten Hochfrequenz-Verarbeitungsschaltungen (6) und zwei längsverlaufende Verbindungsnuten (21a, 21b) umfassenden Transceiver-Chip (21); wobei ein erstes Segment (4a1, 4b1) eines jeden Drahtelements jeweils in der einen und der anderen der Nuten (21a, 21b) des ersten Chips aufgenommen ist;
wobei die Vorrichtung (10) **dadurch gekennzeichnet ist, dass** sie einen zweiten zwei längsverlaufende Verbindungsnute (22a, 22b) aufweisenden Schleifen-Chip (22) umfasst; wobei ein zweites Segment (4a2, 4b2) eines jeden Drahtelements jeweils in der einen und der anderen der Nuten (22a, 22b) des zweiten Chips (22) aufgenommen ist; und dass der zweite Chip (22) eine Schleifenschaltung (6') aufweist, mit der die beiden Drahtelemente (4a, 4b) so elektrisch miteinander verbunden werden können, dass die Antenne der Vorrichtung eine Schleife umfasst.

2. Vorrichtung (10) nach Anspruch 1, wobei sich das erste Segment (4a1, 4b1) am ersten Ende eines jeden Drahtelements (4a, 4b) befindet; und wobei sich das zweite Segment (4a2, 4b2) am zweiten Ende eines jeden Drahtelements (4a, 4b) befindet.

3. Vorrichtung (10) nach Anspruch 1, wobei
- sich das erste Segment (4a1) des ersten Drahtelements (4a) an einem Ende des ersten Drahtelements (4a) befindet; und sich das zweite Segment (4a2) des ersten Drahtelements (4a) im mittleren Abschnitt des ersten Drahtelements (4a) befindet;
- sich das erste Segment (4b1) des zweiten Drahtelements (4b) im mittleren Abschnitt des zweiten Drahtelements (4b) befindet; und sich das zweite Segment (4b2) des zweiten Drahtelements (4b) an einem Ende des zweiten Drahtelements (4b) befindet.

4. Vorrichtung (10) nach Anspruch 1, wobei sich das erste Segment (4a1) und das zweite Segment (4a2) des ersten Drahtelements (4a) im mittleren Abschnitt des ersten Drahtelements (4a) befinden; sich das erste Segment (4b1) und das zweite Segment (4b2) des zweiten Drahtelements (4b) jeweils an einem Ende des zweiten Drahtelements (4b) befinden.

5. Vorrichtung (10) nach Anspruch 1, umfassend einen dritten zwei längsverlaufende Verbindungsnute aufweisenden Chip (23), wobei ein drittes Segment (4a3, 4b3) eines jeden Drahtelements (4a, 4b) jeweils in der einen und der anderen der Nuten des dritten Chips aufgenommen ist.

6. Vorrichtung (10) nach einem der Ansprüche 2 bis 4, umfassend einen dritten zwischen dem ersten Chip (21) und dem zweiten Chip (22) angeordneten und zwei längsverlaufende Verbindungsnute aufweisenden Transceiver- oder Schleifen-Chip (23); wobei ein drittes Segment (4a3, 4b3) eines jeden Drahtelements (4a, 4b) jeweils in der einen und der anderen der Nuten des dritten Chips (23) aufgenommen ist, wobei sich dieses dritte Segment im mittleren Abschnitt eines jeden Drahtelements befindet (4a, 4b).

7. Vorrichtung (10) nach einem der vorhergehenden Ansprüche, wobei sich die zwischen dem ersten Transceiver-Chip (21) und dem zweiten Schleifen-Chip (22) aufgespannte Länge des ersten Drahtelements von der zwischen dem ersten Transceiver-Chip (21) und dem zweiten Schleifen-Chip (22) aufgespannten Länge des zweiten Drahtelements unterscheidet.

8. Vorrichtung (10) nach einem der vorhergehenden Ansprüche, wobei das erste Drahtelement (4a) von anderer Beschaffenheit ist als das zweite Drahtelement (4b).

9. Vorrichtung (10) nach einem der vorhergehenden Ansprüche, wobei die Schleifenschaltung des zweiten Chips (22) passive resistive und/oder kapazitive und/oder induktive Elemente umfasst.

10. Vorrichtung (10) nach dem vorhergehenden Anspruch, wobei die Schleifenschaltung durch eine Metallbahn gebildet ist, die das erste Drahtelement und das zweite Drahtelement in elektrischen Kontakt miteinander bringt.

11. Vorrichtung (10) nach einem der vorhergehenden Ansprüche, wobei der zweite Schleifen-Chip (22) eine aktive Schaltung umfasst.

12. Vorrichtung (10) nach einem der vorhergehenden Ansprüche, wobei der zweite Schleifen-Chip (22) einen Sensor eines Umgebungsparameters der Vorrichtung umfasst.

13. Kette (11) von Hochfrequenzvorrichtungen, Folgendes umfassend:
- zwei leitende Drahtelemente (4A, 4B) großer Länge;
- mehrere Transceiver-Chips (21), die jeweils eine Hochfrequenz-Verarbeitungsschaltung und zwei längsverlaufende Verbindungsnute umfassen; wobei jedes Drahtelement großer Länge (4A, 4B) jeweils in der einen und der anderen der Nuten eines jeden Transceiver-Chips (21) aufgenommen ist;
wobei die Kette **dadurch gekennzeichnet ist, dass** sie mehrere Schleifen-Chips (22) umfasst, von denen jeder zwei längsverlaufende Verbindungsnute aufweist, wobei jedes Drahtelement großer Länge (4A, 4B) jeweils in der einen und der anderen der Nuten eines jeden Schleifen-Chips (22) aufgenommen ist; wobei die Schleifen-Chips (22) jeweils eine Schleifenschaltung aufweisen, die die beiden Drahtelemente großer Länge (4A, 4B) elektrisch miteinander verbindet.

14. Kette (11) von Hochfrequenzvorrichtungen nach dem vorhergehenden Anspruch, wobei die Transceiver-Chips (21) und die Schleifen-Chips (22) einander abwechselnd entlang der beiden Drahtelemente großer Länge (4A, 4B) angeordnet sind.

## Claims

1. Radio-frequency transceiver device (10), comprising
- a first and a second conductive wire element (4a, 4b) which form an antenna of the device (10), and each including a first, a second end and a central part;
- a first transceiver chip (21) comprising radio-frequency processing circuits (6), and two longitudinal connection grooves (21a, 21b); a first segment (4a1, 4b1) of each wire element being housed, respectively, in one and the other of the grooves (21a, 21b) of the first chip;
the device (10) being **characterized in that** it comprises a second looping chip (22) including two longitudinal connection grooves (22a, 22b); a second segment (4a2, 4b2) of each wire element being housed, respectively, in one and the other of the grooves (22a, 22b) of the second chip (22); and **in that** the second chip (22) includes a looping circuit (6') which makes it possible to electrically interconnect the two wire elements (4a, 4b) so that the antenna of the device comprises a loop.

2. Device (10) according to claim 1, wherein the first segment (4a1, 4b1) is located at the first end of each wire element (4a, 4b); and wherein the second segment (4a2, 4b2) is located at the second end of each wire element (4a, 4b).

3. Device (10) according to claim 1, wherein
- the first segment (4a1) of the first wire element (4a) is located at one end of the first wire element (4a); and the second segment (4a2) of the first wire element (4a) is located at the central part of the first wire element (4a);
- the first segment (4b1) of the second wire element (4b) is located at the central part of the second wire element (4b); and the second segment (4b2) of the second wire element (4b) is located at one end of the second wire element (4b).

4. Device (10) according to claim 1, wherein the first segment (4a1) and the second segment (4a2) of the first wire element (4a) are located at the central part of the first wire element (4a); the first segment (4b1) and the second segment (4b2) of the second wire element (4b) are each located at one end of the second wire element (4b).

5. Device (10) according to claim 1 comprising a third chip (23) which includes two longitudinal connection grooves, a third segment (4a3, 4b3) of each wire element (4a, 4b) being housed, respectively, in one and the other of the grooves of the third chip.

6. Device (10) according to any of claims 2 to 4 comprising a third transceiver or looping chip (23), arranged between the first chip (21) and the second chip (22), and including two longitudinal connection grooves; a third segment (4a3, 4b3) of each wire element (4a, 4b) being housed, respectively, in one and the other of the grooves of the third chip (23), this third segment being located in the central part of each wire element (4a, 4b).

7. Device (10) according to any of the preceding claims, wherein the length of the first wire element between the first transceiver chip (21) and the second looping chip (22) is different from the length of the second wire element between the first transceiver chip (21) and the second looping chip (22).

8. Device (10) according to any of the preceding claims, wherein the first wire element (4a) is of a different nature from the second wire element (4b).

9. Devices (10) according to any of the preceding claims, wherein the looping circuit of the second chip (22) comprises passive resistive and/or capacitive and/or inductive elements.

10. Device (10) according to the preceding claim, wherein the looping circuit is formed by a metal track which places the first wire element and the second wire element in electrical contact.

11. Device (10) according to any of the preceding claims, wherein the second looping chip (22) comprises an active circuit.

12. Device (10) according to any of the preceding claims, wherein the second looping chip (22) comprises a sensor for detecting an environmental parameter of the device.

13. Chain (11) of radio-frequency devices, comprising:
- two long-length conductive wire elements (4A, 4B);
- a plurality of transceiver chips (21) each comprising a radio-frequency processing circuit and two longitudinal connection grooves; each long-length wire element (4A, 4B) being housed, respectively, in one and the other of the grooves of each transceiver chip (21);
the chain being **characterized in that** it includes a plurality of looping chips (22) each including two longitudinal connection grooves, each long-length wire element (4A, 4B) being housed, respectively, in one and the other of the grooves of each looping chip (22); the looping chips (22) each including a looping circuit which electrically interconnects the two long-length wire elements (4A, 4B).

14. Chain (11) of radio-frequency devices according to the preceding claim, wherein the transceiver chips (21) and the looping chips (22) are arranged so as to alternate along the two long-length wire elements (4A, 4B).
